# EUROPEAN PATENT SPECIFICATION

(11) **EP 3 559 082 B1**
(45) Date of publication and mention of the grant of the patent: **17.03.2021**
(21) Application number: 17822586.8
(22) Date of filing: 11.12.2017
(51) Int. Cl.: C08G 65/26

(54) **CONTINUOUS FLOW PROCESS FOR THE POLYMERIZATION OF AN ALKYLENE OXIDE**
KONTINUIERLICHER DURCHFLUSSPROZESS ZUR POLYMERISIERUNG EINES ALKYLENOXIDS
PROCESSUS D'ÉCOULEMENT CONTINU POUR LA POLYMÉRISATION D'UN OXYDE D'ALKYLÈNE

(30) Priority: 23.12.2016 EP 16206775
(43) Date of publication of application: 30.10.2019
(73) Proprietor: Université de Liège, 4000 Liège (BE)
(72) Inventor: MONBALIU, Jean-Christophe, 4000 Liège (BE); HANS, Morgan, 4000 Liège (BE)
(74) Representative: Connor, Marco Tom
(86) International application number: PCT/EP2017/082162
(87) International publication number: WO 2018/114416

(56) References cited:
- CN-A- 104 829 824
- CN-B- 101 367 925
- GB-A- 736 991
- SOLOV'YANOV A A ET AL: "Polymerization of ethylene oxide in dimethyl sulphoxide (DMS)", POLYMER SCIENCE U.S.S.R, PERGAMON PRESS, OXFORD, vol. 14, no. 5, 1 January 1972 (1972-01-01), pages 1196-1206, XP024112009, ISSN: 0032-3950, DOI: 10.1016/0032-3950(72)90163-3 [retrieved on 1972-01-01]
- CHARLES C. PRICE ET AL: "Kinetics of base-catalyzed polymerization of epoxides in dimethyl sulfoxide and hexamethylphosphoric triamide", JOURNAL OF THE AMERICAN CHEMICAL SOCIETY, vol. 94, no. 11, 1 May 1972 (1972-05-01), pages 3972-3975, XP055373183, ISSN: 0002-7863, DOI: 10.1021/ja00766a053

## Description

### FIELD OF THE INVENTION

The present invention generally relates to the polymerization of alkylene oxides, such as ethylene oxide, propylene oxide, or butylene oxide. In particular, it concerns a particularly efficient continuous flow process for the polymerization of alkylene oxide carried out at low temperatures, such as room temperature, and moderate pressure, such as 1 to 20 bar. The continuous flow process of the present invention is more efficiently carried out in a micro-polymerization line, wherein mixing and temperature of the components is rapid and easy to control.

### BACKGROUND OF THE INVENTION

Aliphatic polyethers are an important class of polymers used in many applications, ranging from pharmaceutical formulations to material technology. Among these polyethers, macromolecules synthesized from ethylene oxide, propylene oxide, and butylene oxide are the most common alkene oxides. Polyether-based polymers have unique properties arising from their hydrophilic backbone. Aliphatic polyethers can be prepared as homo- or heterobifunctional polymers with various end-chain functions, or can be incorporated in other macromolecular structures.

Several techniques for the polymerization of alkene oxides have been reported in the literature. Anionic polymerization has been used extensively. The anionic polymerization of alkene oxides uses nucleophiles as initiators. For example, low-molecular weight poly(ethylene oxide) (4 kDa) is commonly obtained by reacting ethylene oxide with water or alkali hydroxides as initiators. High-molecular weight poly(ethylene oxide) (50 kDa) architectures usually require alkali alkoxides (mostly sodium or potassium) or other nucleophiles such as hydrides or amines as initiators. Alkali alkoxides in polar solvents such as tetrahydrofuran (THF) constitute a well-known and efficient type of initiators for alkene oxide polymerization. Polymerization in bulk has also been reported, although it comes with a higher polydispersity. Fast kinetics are reported with primary alkoxides, while bulkier initiators tend to lower the reaction speed. Other additives such as crown ethers may be added to enhance the polymerization kinetics. High temperatures of up to 250°C and high pressures of up to 150 bar, however, are generally required to yield industrially acceptable polymerization kinetics.

As an example, tetrahydropyranyl monoprotected ethylene glycol was reported by Hiki and Kataoka (in Bioconjugate Chem. 2010, 21, 248-254) as an efficient pre-initiator. *In situ* deprotonation of this pre-initiator, followed by addition of ethylene oxide yields α-(tetrahydropyranyl-O),ω(OH)-heterobifunctional poly(ethylene glycol) with yields of up to 97%, polydispersity of 1.03 to 1.04, and concordance of theoretical and experimental molar mass. Heterobifunctional polyethers with different chain-ends were prepared with this pre-initiator, which allowed independent functionalization or transformation of both chain-ends.

Most of the processes reported in the art for the polymerization of alkene oxides rely on macroscopic batch reactors (internal dimensions typically greater than 10⁴ µm, and internal volumes ranging from 10⁻³ I to 10³ I, as described in, for example, CN102453253, CN102391494, CN103554472, CN103709391, CN103709393, CN103709389. Since alkene oxides and, in particular, ethylene oxide are extremely reactive, highly explosive and toxic molecules, their handling in macroscopic batch reactors raises significant safety issues, especially when high temperature and pressure conditions are required. Besides safety issues, conventional macroscopic batch reactors also come with inherent limitations for heat exchange and mixing efficiency, which can account for poor reaction control, decrease in molecular weight and larger molecular weight distribution.

To overcome such limitations, continuous-flow methods were developed, as described in DE2900167, DD142809, CN102099396, CN1390240, CN104829824, CN101367925. Continuous-flow methods have the advantages over batch methods of more efficient heat exchanges and higher mixing efficiency. They also ensure a safer process with an enhanced control over the reaction conditions and homogeneity of the polymer thus produced. Continuous-flow reactors are composed of channels for the circulation of chemicals. The internal diameter of such channels is typically of the order of 250 - 800 µm in continuous-flow microreactors and is > 1 mm in continuous-flow mesoreactors. The polymerization conditions in the continuous-flow processes reported in the foregoing documents for the production of alkene oxides comprise temperatures ranging from 100 to 250°C, pressures ranging from 0.2 to 15 MPa (= 2 to 150 bar), and reaction times ranging from 0.5 to 3 h.

In particular, CN101367925, describes feeding into a continuous flow mesoreactor of internal diameter of 50-100 mm, three streams of materials including a regulator, oxirane monomer, and an ammonia-calcium catalyst, each in a solvent selected from n-hexane or n-heptane. The three materials are first blended at low temperature of -50 to -20°C, and then reacted at a temperature of 20 to 40°C for 20 to 40 min.

CN104829824 describes a continuous flow polymerization process comprising (a) preparing a liquid catalyst by reacting an alkali base (KOH, NaOH or NaOR and KOR) and a pre-initiator (polyol or polyamine), and (b) reacting the thus prepared liquid catalyst with an alkene oxide in a continuous-flow microreactor equipped with a micro-mixer and a residence time unit. Reaction temperatures ranging from 150 to 250°C and pressures ranging from 20 to 150 bar were required to polymerize ethylene oxide within reaction times comprised between 20 and 1000 s (= 0.3 to 17 min).

The present invention proposes a polymerization process of alkylene oxides which is safe, has high yield, and can be carried out at moderate to low temperatures, pressures, and reaction times. These and other advantages of the present invention are described in continuation.

### SUMMARY OF THE INVENTION

The present invention is defined by the attached independent claims. The dependent claims define preferred embodiments. In particular, the present invention concerns a continuous-flow process for the polymerization of an alkylene oxide comprising the following steps:
(a) mixing an alkylene oxide with a monomer solvent, to form a monomer solution; wherein the monomer solvent is a polar aprotic solvent, wherein the alkylene oxide is preferably selected among ethylene oxide, propylene oxide or butylene oxide,
(b) forming a reaction mixture by mixing the monomer solution with an anionic initiator selected among the alkali or alkaline-earth alkoxides of general formula R-O-M, wherein
   - R is a straight, branched or cyclic alkyl chain, an heterocycle, a glycol or a combination of two or several of these,
   - O is oxygen, and
   - M is or comprises an alkali, an alkaline-earth metal or salt thereof; and is preferably selected among lithium, sodium or potassium, and
   wherein the anionic initiator is preferably dissolved in a solvent to form an initiator solution before mixing with the monomer solution, preferably the initiator solvent is the same as the monomer solvent,
(c) allowing the reaction mixture to react,
   - for a polymerization time, t, comprised between 1 s and 60 min, preferably between 20 s and 50 min, more preferably between 30 s and 20 min,
   - at a polymerization temperature, T, comprised between 0 and 100°C, preferably between 20 and 50°C, more preferably between 25 and 35°C and
   - at a polymerization pressure, P, comprised between 1 and 10 bar, preferably between 1.5 and 10 bar, more preferably between 2 and 5 bar, above atmospheric pressure,
      thus forming a polymerized solution comprising a polymerized alkylene oxide and a solvent; and
(d) separating the solvent from the polymerized alkylene oxide

In a preferred embodiment, the monomer solvent can have:
- a donor number (DN) of at least 120 kJ / mol according to Gutmann's thermodynamic scale and/or
- an acceptor number (AN) of not more than 20 according to Gutmann-Beckett's scale and/or
- a dielectric constant (ε) greater than 30.

For example, the monomer solvent can be one of dimethyl sulfoxide (DMSO), hexamethylphosphoramide (HMPA), tetraalkylureas, or cyclic alkylureas, preferably 1,3-Dimethyl-3,4,5,6-tetrahydro-2-pyrimidinone (DMPU) and pyridine.

The continuous-flow process of the present invention is preferably carried out in a polymerization line, wherein step (a) is carried out in a solution reactor module), step (b) is carried out in a mixing reactor module (103) in fluid communication with the first reactor module by means of a connecting tube, and wherein step (c) is carried out in a polymerization reactor module, preferably a tubular reactor forming a serpentine. For a more efficient control of the reaction, the continuous-flow process is preferably carried out in a micro-polymerization line, wherein the internal diameters of the solution and mixing reactor modules are comprised between 100 µm and 1000 µm, preferably between 200 and 800 µm and wherein the connecting tube and polymerization reactor module are capillary tubes of inner diameter comprised between 50 and 700 µm, preferably between 100 and 500 µm. For example, the total inner volume of the solution, mixing, and polymerization reactor modules and connecting tubes can be comprised between 1 and 10 ml, preferably between 2 and 6 ml

The molar ratio of monomer to initiator must be carefully controlled. It is preferred that the monomer to initiator molar ratio be comprised between 2000 and 20, preferably between 100 and 30, and more preferably between 50 and 40. The molar ratio is controlled, on the one hand, by the flowrates of the monomer solution and initiator (solution) and, on the other hand, on the monomer and initiator concentrations in their respective solutions.

For example, the following flowrates of the various components can be achieved with a micro-polymerization line:
- The flow rate of the reaction mixture through the polymerization reactor module can be comprised between 0.1 and 10 ml / min, preferably between 0.3 and 1 ml / min; and/or
- The flow rate of monomer solution into the mixing reactor module can be comprised between 0.1 and 9 ml / min, preferably between 0.2 and 1 ml / min, and/or
- The flow rate of initiator into the mixing reactor module can be comprised between 0.1 and 1 ml / min, preferably between 0.2 and 0.5 ml / min

The alkylene oxide and initiator can be present in their respective solutions at the following concentrations:
- The alkylene oxide can be present in the monomer solution at a concentration comprised between 0.1 and 10 M, preferably between 1 and 5 M, and/or
- The anionic initiator can be fed into the mixing reactor module in a solvent, preferably the same as in step (a), at a concentration comprised between 0.1 and 10 M, preferably between 1 and 5 M.

For optimizing the mixing efficacy of the components, the polymerization line preferably comprises mixing devices. For example, the solution and mixing reactor modules can be equipped with a mixing device comprising one or more of an arrow-head mixer, T-mixer, Y-mixer, cross-junction micromixer, or static micromixer, made of glass, stainless steel, polymeric material, or ceramics, or a combination of two or more of the foregoing materials.

The continuous-flow process of the present invention can comprise additional steps between steps (c) and (d) including,
(c1) functionalizing one or both ends of polymer chains of the polymerized solution by addition in a functionalization reactor module of one or two functionalization agents (6) to the reaction mixture as it polymerizes, or to the polymerized solution, and/or
(c2) terminating the polymerization by addition in a terminating reactor module of a termination agent to the polymerized solution after the time, t, and/or
(c3) monitoring the polymerization of the reaction mixture by means of one or more in line analysis units, preferably comprising at least one spectroscopic analysis unit,
(c4) a precipitation step for forming in a precipitation unit two distinct phases in the polymerized solution, with a liquid phase, formed by solvent(s), and a solid phase formed by the alkylene oxide polymer.

After or within the separation unit, an extraction step can be used to recover and recycle the solvent.

### BRIEF DESCRIPTION OF THE FIGURES.

Various embodiments of the present invention are illustrated in the attached Figures.
- **Figure 1:**: shows a continuous reactor device suitable for carrying out the process of the present invention.
- **Figure 2:**: shows an alternative continuous reactor device suitable for carrying out the process of the present invention.
- **Figure 3:**: shows polymerization times for different monomer solvents.
- **Figure 4:**: illustrates the effects of donor and acceptor number on the reactivity of the reaction mixture.

### DETAILED DESCRIPTION OF THE INVENTION

### Polymerization Process and Polymerization Line

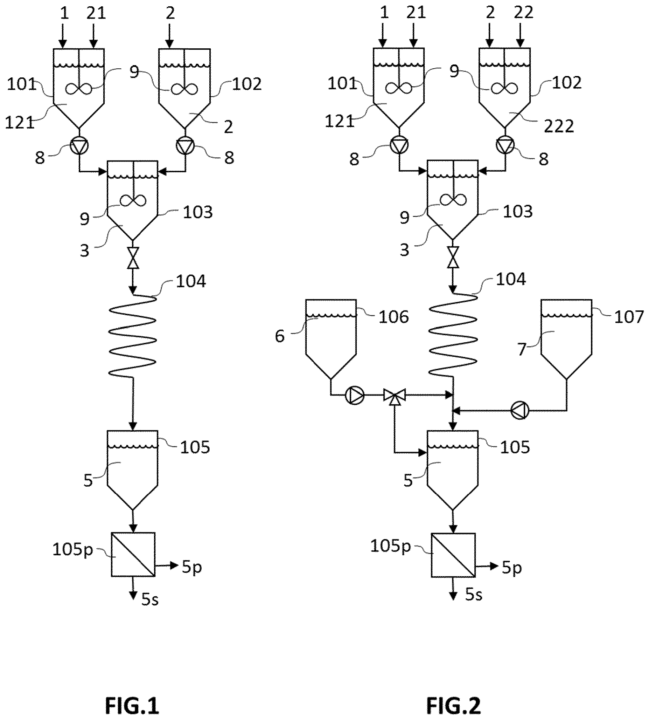

As can be seen in Figure 1, the various steps of a continuous-flow process for the polymerization of an alkylene oxide according to the present invention can be carried out in a polymerization line. The polymerization process comprises a first step (a) of mixing an alkylene oxide (1) with a monomer solvent (12), to form a monomer solution (121). The monomer solvent must be a polar aprotic solvent. This step can be carried out in a solution reactor module (101), preferably provided with a mixing device (9).

In a second step (b), an anionic initiator (2) is mixed with the monomer solution to form a reaction mixture (3). The anionic initiator is an alkali or alkaline-earth alkoxide of general formula R-O-M, wherein,
- R is a straight, branched or cyclic alkyl chain, a heterocycle, a glycol or a combination of two or several of these,
- O is oxygen and
- M is or comprises an alkali, an alkaline-earth metal or salt thereof.

The anionic initiator is preferably added to the monomer solution in a liquid form. The anionic initiator can either be liquid at the pressure and temperature of the system (cf. Figure 1), or dissolved in an initiator solvent (22) to form an initiator solution (222) (cf. Figure 2). The initiator solvent is preferably the same as, or is at least soluble in the monomer solvent. The initiator solution can be prepared in an initiator reactor module (102). Pumps (8), preferably volumetric pumps can be used for feeding the monomer solution (121) and the anionic initiator (2) or initiator solution (222) into a mixing reactor module (103) to form the reaction mixture (3). For example, piston pumps can be used. The volumetric control of the feeding of monomer solution and anionic monomer is important to control the monomer to initiator ratio. The monomer to initiator ratio is preferably comprised between 2000 and 20, more preferably between 100 and 30, and most preferably between 50 and 40.

The mixing reactor module (103) is also preferably provided with a mixing device (9). The mixing device can be selected among one or more of an arrow-head mixer, T-mixer, Y-mixer, cross-junction micromixer, or static micromixer. The mixer devices can be made of glass, stainless steel, polymeric material, or ceramics, or a combination of two or more of the foregoing materials. The quality of mixing of the various components is very important in the continuous process of the present invention, as it influences the polymerization kinetics, yield, and homogeneity (e.g., narrower molecular weight distribution).

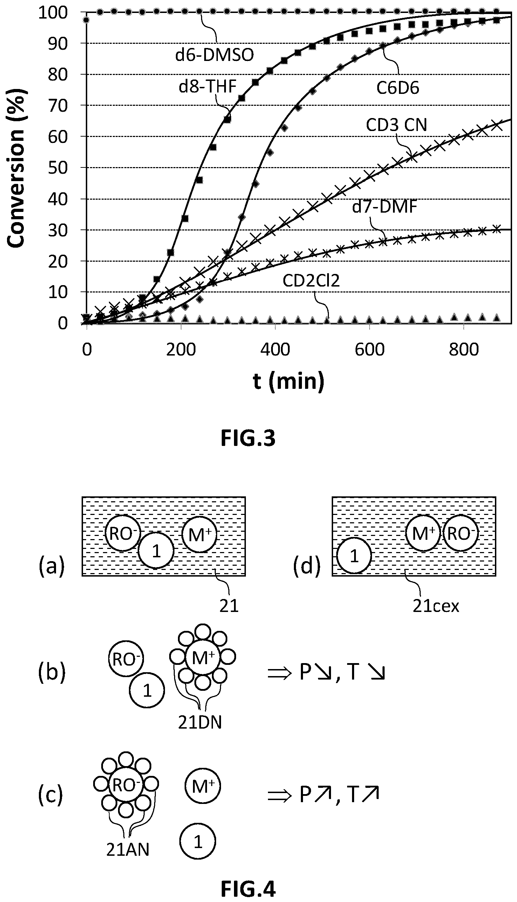

The reaction mixture is allowed in a third step (c) to react for a polymerization time, t, at a polymerization temperature, T, and at a polymerization pressure, P, to form a **polymerized solution (5):** The polymerization solution is not necessarily a true solution and can be a suspension or simply a mixture of solvent and polymerized alkylene oxide instead. The polymerization reaction can be carried out in a polymerization reactor module (104), which is preferably a tubular reactor forming a serpentine in fluid communication with the mixing reactor module (103). The flow rate of the reaction mixture (3) from the mixing reactor module to the polymerization reactor module can be controlled by a valve or a pump. The polymerization time, temperature, and pressure required for completing polymerization strongly depend on the monomer solvent used, as can be seen in Figure 3, which will be discussed more in detail below.

By selecting an appropriate monomer solvent (21), polymerization times comprised between 1 s and 60 min can be reached, at a temperature comprised between 0 and 100°C, and at a pressure comprised between 1 and 10 bar above atmospheric pressure. Preferably, the polymerization time is comprised between 20 s and 50 min, more preferably between 30 s and 20 min. The temperature may be comprised between 20 and 50°C, preferably between 25 and 35°C. The polymerization pressure, P, may be comprised between 1.5 and 10 bar, preferably between 2 and 5 bar above atmospheric pressure.

After the polymerization reaction is completed, a polymerized solution (5) is collected at a step (e) in a polymer vessel (105). The polymerized alkylene oxide (5p) is then separated from the solvent (5s) in a separation unit (105p). The polymerized alkylene oxide (5p) is generally a solid in suspension in a solvent. The separation unit can then be simply a decantation vessel. The separation unit preferably comprises separation means, such as a filter. In order to accelerate the separation step, filtration can be carried out under pressure or centrifugal forces. If the polymerized alkylene oxide (5p) is dissolved in the solvent (5s), the polymerized alkylene oxide (5p) can be made to precipitate before reaching the separation unit. If the same solvent as the monomer solvent has been used throughout the process, the solvent (5s) of the polymerized solution is monomer solvent (21). This embodiment is preferred, because the monomer solvent can be recycled after separation to form new solutions. If different solvents are used to form the initiator solution, or a functionalization or termination solution, then the solvent (5s) is a mixture of solvents, which needs be separated again prior to re-use.

The various reactor modules (101-104), vessel (105) and separation unit (105p) are in fluid communication with one another has illustrated in Figure 1, by a series of connecting tubes. The connecting tubes may be provided with pumps (8) or valves for allowing the control of flow through one or more connecting tubes.

The continuous flow process of the present invention allows the functionalization of one or more of the two ends of the poly(alkylene oxide) chains formed in the polymerization reactor module (104). As illustrated in Figure 2, a functionalization reactor module (106) can be provided for feeding one or more (generally one or two) functionalization agents (6) to the reaction mixture as it polymerizes in the polymerization reactor module (104), or to the polymerized solution in the polymer vessel (105). Any functionalization agent suitable for reacting with one or both chain ends of the polymer can be used in the continuous flow process of the present invention. Examples of functionalization agents (6) include but are not limited to aziridines, alkyl sulfonates, cyclic sulfonates (sultones), alkyl triflates and anhydrides. A person of ordinary skill in the art knows the advantages associated with functionalization and can select the most appropriate functionalization agents to a particular application. The functionalization agent(s) may be fed directly into the polymerizing reaction mixture or into the polymerized solution if it (they) are liquid. Alternatively, the functionalization agent(s) can be dissolved in a solvent, compatible with (i.e. soluble in), or the same as the monomer solvent.

As shown in Figure 2, the polymerization line may also comprise a terminating reactor module (107) for feeding a termination agent (7) to the polymerizing reaction mixture at or downstream from the polymerization reactor module (104), for terminating the polymerization. The use of a termination agent allows the control of the molecular weight of the polymerized alkylene oxide. Termination agents may be acids, such as acetic acid, formic acid, aqueous hydrochloric acid, or aqueous ammonium chloride.

The polymerization line may be equipped with one or more in line analysis units for monitoring the polymerization of the reaction mixture. Spectroscopic analysis units are preferred such as an infrared spectroscopy unit (e.g., FTIR). Similarly, the polymerization line may be equipped with additional operations units such as,
- a precipitation unit for forming two distinct phases in the polymerized solution (5), with a liquid phase, formed by the solvent(s) (5s), and a solid phase formed by the alkylene oxide polymer (5p) in view of their separation in the separation unit (105p),
- an extraction unit for recycling solvents.

### Alkylene Oxide Monomer and Anionic Initiator

The alkylene oxide monomer used in the process of the present invention is preferably selected among ethylene oxide, propylene oxide or butylene oxide. The alkylene oxide monomer may in some embodiments be admixed with a comonomer such as a lactide, caprolactone or a different alkene oxide. The alkylene oxide monomer is present in the monomer solution at a concentration preferably comprised between 0.1 and 10 M, more preferably between 1 and 5 M.

As explained supra, the anionic initiator suitable for the present invention is selected among the alkali or alkaline-earth alkoxides of general formula R-O-M, wherein,
- R is a straight, branched or cyclic alkyl chain, an heterocycle, a glycol or a combination of two or several of these,
- O is oxygen and
- M is or comprises an alkali, an alkaline-earth metal or salt thereof.

M is preferably selected among lithium, sodium or potassium. In some embodiments, the anionic initiator may include an alkali *tert*-butoxide or a monotetrahydropyranylated ethylene glycol potassium salt. For example, the anionic initiator can be potassium 2-(tetrahydro-2H-pyran-2-yloxy)ethoxide (= THPOCH₂CH₂OK) or potassium *tert*-butoxide.

The alkylene oxide may be present in the monomer solution at a concentration comprised between 0.1 and 10 M, preferably between 1 and 5 M. If, as illustrated in Figure 2, the anionic initiator is fed into the mixing reactor module as an initiator solution (222) dissolved in an initiator solvent (22), preferably the same as the monomer solvent (21), then the anionic initiator can be present in the initiator solvent at a concentration comprised between 0.1 and 10 M, preferably between 1 and 5 M.

### Monomer Solvent

As shown in Figure 3, the choice of the monomer solvent has a surprisingly dominant influence on the kinetics of polymerization of alkylene oxides according to the present invention. The kinetics of ethylene oxide polymerization in various solvents was studied. A 50 ml Schlenk flask was charged with potassium *tert*-butoxide as initiator (2). Dry and degassed solvents as listed in Table 1 and liquid ethylene oxide (1) were successively added. The polymerization reactions were performed in NMR tubes and a NMR spectrum was recorded every 30 min over 15 h at 25°C for each solvent. The ethylene oxide to initiator molar ratio was fixed at 44, and the concentration of the monomer was 4 M. The conversions plotted in Figure 3 as a function of time were determined by monitoring the disappearance of a typical signal of ethylene oxide (at ca. 2.5 ppm), and the appearance of a typical signal of poly(ethylene glycol) (at ca. 3.6 ppm).

**Table 1: solvents tested and plotted in Figure 3, with values of donor number (DN) and acceptor number (AN)**

| **Ref** | | **Solvent name** | DN [kcal/mol] | DN [kJ/mol] | AN [--] |
|---|---|---|---|---|---|
| C6D6 | CEX | Benzene-d6 (Hexadeuterobenzene) | 0.4 | 1.7 | 8.2 |
| d8-THF | CEX | Tetrahydrofuran-d8 (Octadeuterotetrahydrofuran) | 20.0 | 84.0 | 8.0 |
| CD2Cl2 | CEX | Dichloromethane-d2 (Dideuteromethylenechloride) | 1.0 | 4.2 | 20.4 |
| CD3CN | CEX | Acetonitrile-d3 (Trideuteroacetonitrile) | 14.1 | 59 | 18.9 |
| d7-DMF | CEX | N,N-Dimethylformamide-d7 (Heptadeutero-N,N-dimethylformamide) | 26.6 | 111.0 | 14.2 |
| d6-DMSO | INV | Dimethyl sulfoxide-d6 (Hexadeuterodimethyl sulfoxide) | 29.8 | 125.0 | 19.3 |

| | | | | | |
|---|---|---|---|---|---|
| CEX = comparative example; INV = according to the present invention | | | | | |

It can be seen in Figure 3, that the quickest polymerization reaction was obtained with d6-DMSO, with a full conversion time within less than 15 minutes. The time for reaching full conversion is measured in the present example as the time for reaching 97% conversion. D8-THF, which is the solvent most currently used in the art, yields the second quickest full conversion rate, with substantially longer conversion times of about 840 min (= 14 h). C6D6, with a slower start than THF, catches up with similar full conversion times of 840 min (= 14 h). The remaining solvents yield substantially longer full conversion times, largely exceeding 900 min (> 15 h), with CD2CI2 yielding the lowest conversion rate with no observable polymerization after 15 h reaction time.

Without wishing to be bound by any theory, the surprising results obtained with DMSO compared with other, traditionally used solvents, can be explained as follows. DMSO is a polar aprotic solvent having a rather high donor number (DN) of 125 kJ / mol (= 29.9 kcal / mol) according to Gutmann's scale. Polar aprotic solvents having a high donor number (DN) according to Gutmann's thermodynamic scale, and having a low acceptor number (AN) according to Gutmann-Beckett's 31P NMR scale are of particular interest for controlling the reactivity of alkoxide species used as anionic initiator in the continuous flow polymerization process according to the present invention.

Alkoxide species are responsible for the propagation of the anionic polymerization of ethylene oxide. As illustrated in Figure 4, the anionic alkoxide species (RO⁻) are associated with a cation (M⁺), selected among the alkali and the alkaline-earth elements (generally, Li, Na, K, Cs, Ca, Mg, Be), forming ion pairs. The nature of these ion pairs has a strong impact on the reactivity of the anion, ranging from:
- tight pairs, wherein anionic alkoxide and metal cation remain in close proximity as illustrated in Figure 4(d) with a monomer solvent (21cex) which is not suitable for the present invention, such that tight ion pairs are responsible for a low reactivity, to
- loose pairs, wherein anionic alkoxide and metal cation are less attracted to one another, allowing more distance to separate the anions from the cations, as illustrated in Figure 4(a) with a monomer solvent (21) which is suitable for the present invention, and yielding an increased reactivity of the alkoxide anion.

As illustrated in Figure 4(b), a polar aprotic solvent (21DN) having a high DN can stabilize metal cations (M+), and hence weaken alkoxide metal ions pairs. The reactivity of the alkoxide anion is therefore increased. A high DN is therefore preferred for increasing the reactivity of the alkoxide anions (RO⁻) with the alkylene oxide monomers (1), thus requiring lower values of pressure (P) and temperature (T), and yielding shorter polymerization times (t).

As illustrated in Figure 4(c), loose alkoxide metal ions pairs can also be obtained with a polar aprotic solvent (21AN) having a high acceptor number (AN). Indeed, such solvent can interact very strongly with the alkoxide anions (RO⁻) and form loose ionic pairs. In this case, however, the alkoxide anions (RO⁻) are isolated from the alkylene oxide monomers (1), and higher pressures (P) and temperatures (T) are required for carrying out the polymerization stage. A polar aprotic solvent suitable for the present invention therefore preferably has a moderate to low value of AN.

The Gutmann-Beckett Acceptor (AN) and Donor number (DN) are measures of the strength of solvents as Lewis acids or bases. The Acceptor Number is based on the 31P-NMR chemical shift of triethylphosphine oxide in the solvent. The Donor Number is based on the heat of reaction between the 'solvent' and SbCl5 in CH₂ClCH₂Cl.

Some polar aprotic solvents, such as DMSO which yielded such superior polymerization kinetics in Figure 3 over other solvents, are both donor and acceptor, but the donor ability is substantially higher than the acceptor ability. As mentioned supra and listed in Table 1, DMSO has a donor number, DN = 125 kJ / mol (= 29.9 kcal / mol) and an acceptor number of AN = 19.3. The values of DN and AN of the other solvents tested in Figure 3 are also listed in Table 1.

Based on the above observation, a polar aprotic solvent suitable for use as monomer solvent in the present invention preferably has a donor number (DN) of at least 120 kJ/mol according to Gutmann's thermodynamic scale. The donor number, DN, preferably does not exceed 250 kJ / mol, preferably does not exceed 200 kJ / mol. The acceptor number (AN) should be low and is preferably not more than 20 according to Gutmann-Beckett's scale. For example, ethanol has a high value of DN = 132 kJ / mol (= 31.5 kcal / mol) but also a high value of AN = 37.9 which makes it less suitable as a monomer solvent (21) than DMSO.

The dielectric constant (ε) of a solvent also has an effect on solubility of anionic components. In a preferred embodiment, the monomer solvent is a polar aprotic solvent having a dielectric constant (ε) greater than 30. If an initiator solvent (22) is used for forming an initiator solution (222) (cf. Figure 2), it is preferred that the initiator solvent have the same properties as discussed above with respect to the monomer solvent (21). Preferably, the initiator solvent is the same as the monomer solvent.

Examples of monomer solvents suitable for the present invention include, dimethyl sulfoxide (DMSO), hexamethylphosphoramide (HMPA), tetraalkylureas, or cyclic alkylureas, such as 1,3-Dimethyl-3,4,5,6-tetrahydro-2-pyrimidinone (DMPU), or pyridine. Other solvents with DN- and AN-values comprised within the preferred ranges exist, but care must be taken with respect to the toxicity of the selected monomer solvent.

### Micro- or Meso-Polymerization Line

The gist of the present invention is to combine, on the one hand,
(a) the right components including monomer (1), anionic initiator (2) and, in particular, monomer solvent (21), such as to yield high intrinsic kinetics with, on the other hand,
(b) a polymerization line allowing fast mixing and accurate control of temperature and pressure.

The combination of these two elements allows rapid polymerization times, below 60 min, at low temperature (including room temperature) and low to moderate pressures. This has the further benefit of reducing the thermal and mechanical resistance requirements of the polymerization set-up, and thus reducing its cost.

The choice of (a) an appropriate monomer solvent (and monomer and initiator) has been discussed in detail in the previous sections. According to the present invention, only a continuous flow polymerization line can reach the requirements defined in point (b) supra. Beside the poorer heat exchanges and mixing efficacy in batch processes, because of the high reactivity of the components, such as ethylene oxides, the risk of explosions is higher in a batch process than in a continuous flow process, wherein addition of monomer is spread over a longer period of time. The polymerization set-up according to the present invention must therefore include a continuous flow polymerization line.

High control of the temperature and high mixing speeds can be better achieved if the continuous flow polymerization line has reactor modules and connecting tubes of small dimensions. In particular, a meso-polymerization line can be used, with internal diameters of the reactor modules and connecting tubes of the order of 1 to 20 mm. Higher mixing rates and enhanced temperature control were achieved, however, with micro-polymerization lines defined by internal diameters of the solution and mixing reactor modules comprised between 100 µm and 1000 µm, preferably between 200 and 800 µm. The connecting tubes and polymerization reactor module are preferably composed of capillary tubes of inner diameter comprised between 50 and 700 µm, more preferably between 100 and 500 µm. The total inner volume of the solution, mixing, and polymerization reactor modules and connecting tubes can for example be comprised between 1 and 10 ml, preferably between 2 and 6 ml.

In a micro-polymerization line, the flow rate of monomer solution (121) into the mixing reactor module (103) can be comprised between 0.1 and 9 ml / min, preferably between 0.2 and 1 ml / min. Similarly, the flow rate of initiator (2) or initiator solution (222) into the mixing reactor module may be comprised between 0.1 and 1 ml / min, preferably between 0.2 and 0.5 ml / min. The monomer to initiator molar ratio is preferably controlled between 2000 and 20, preferably between 100 and 30, and more preferably between 50 and 40. The reaction mixture (3) is preferably fed from the mixing reactor module (103) through the polymerization reactor module (104) at a flow rate comprised between 0.1 and 10 ml / min, preferably between 0.3 and 1 ml / min.

The. microstructured polymerization line can be constructed from microfluidic modules made of glass, stainless steel, polymeric materials, ceramics, silicon carbide or a combination of two or several of the aforementioned materials. The microfluidic modules may include mixers, in-line check valves, pressure regulators, three-way valves, connectors, ferrules, and microreactors connected in series or in parallel through capillaries. The capillaries may be made of stainless steel or polymeric materials, such as PEEK, PFA, ETFE or PTFE. The general design of the micro-polymerization line may include microfluidic chips, coils or tubular fluidic reactors having an internal diameter comprised between 100 and 1000 µm, preferably between 200 and 800 µm. Mixers may be embedded in the microreactor or inserted as independent fluidic elements, such as arrow-head mixers, T-mixers, Y-mixers, cross-junctions or static micromixers, made either of glass, stainless steel, polymeric materials and ceramics, or a combination of two or several of the aforementioned materials.

In some embodiments, several micro-polymerization lines may be fluidically coupled in parallel to the sources of monomer solution (121) and anionic initiator (2) or initiator solution (222) to increase productivity. One micro-polymerization line unit is very cheap to produce and a large array of a number of such units can easily be thus arranged in parallel to reach high production rates.

### Example

A continuous-flow polymerization line was produced for the polymerization of ethylene oxide (1) in the presence of potassium tert-butoxide (2) in dimethylsulfoxide (21). The setup comprised two feed solutions for a monomer solution (121) and an initiator solution (222) to a perfluoroalkoxy alcane polymer (PFA) coil reactor (104) through a polyether ether ketone (PEEK) T-mixer (103, 9). High pressure Chemyx 6000 pumps (8) were used to deliver the reagents and a 3-way valve was inserted before the T-mixer to avoid back flush upon reactor operation.

A 0.2 M initiator solution (222) of potassium tert-butoxide in dry and degassed dimethylsulfoxide and a 4 M monomer solution (121) of ethylene oxide in dry and degassed dimethylsulfoxide were loaded in two 20 ml HP SS syringes, and then installed on HP syringe-pumps, and connected to the coil reactor via the PEEK T-mixer of internal diameter of 500 µm. The initiator solution was delivered at a flow rate of 0.48 ml / min, and mixed through the PEEK T-mixer with a stream of monomer solution flowing at 0.1 ml / min. The monomer solution was obtained by mixing ethylene oxide and dimethylsulfoxide in a mixing reactor module (101) fluidically connected upstream of the injection of the initiator solution. The flow rates were set to ensure a monomer to initiator molar ratio of 44.

The homogeneous stream of potassium tert-butoxide and ethylene oxide in dimethylsulfoxide was then reacted at 25°C under 2 bar of pressure in a thermostatized microfluidic polymerization reactor module (104) constructed from 4 m of PFA capillary tubing with a 2 ml internal volume. The total flow rate through the polymerization reactor module was equal to 0.148 ml / min and the residence time was 15 min. The outlet of the PFA loop was fluidically connected to a PEEK T-mixer of internal diameter of 500 µm for downstream processing by quenching with aqueous acetic acid to terminate polymerization. The entire micro-polymerization line was operated during over 5h at steady state. The polymerized ethylene oxide thus produced had the following properties: a theoretical molecular weight of Mn(Th) = 1000 g / mol, assuming 100% polymerization, a measured molecular weight of Mn(Exp) = 900, and a polydispersity of PDI = 1.10. The structural characterization of the polymer by proton nuclear magnetic resonance in deuterated chloroform (= 1H NMR (CDCl3)) yielded the following chemical shift results, δ, for CH₂-PEG and CH₃ moieties, respectively: δ = 3.65 (s, 110H, CH₂-PEG) and 1.20 (s, 9H, CH₃) ppm.

The continuous-flow process for polymerization of an alkylene oxide of the present invention is highly advantageous. By a proper selection of the monomer solvent (21), the process may be carried out at low temperature, such as at room temperature and at low to moderate pressure, with short reaction times, typically shorter than one hour, and even shorter than 15 minutes. By carrying out the continuous-flow process of the present invention in a micro-polymerization line, the process can run optimally by an enhanced control on the reaction conditions, such as temperature, pressure, flow rate and local stoichiometry. The process also permits to obtain a product with well-defined molecular parameters such as molar mass and polydispersity. The continuous flow process of the present invention provides a substantially safer handling of alkylene oxides such as ethylene oxide. The process further enables the preparation of homo- or heterobifunctional polyalkylene oxides, such as homo- or heterobifunctional polyethylene oxide. Another advantage is the flexibility to produce polyalkylene oxide on-demand, for specific molecular parameters and even for small production volumes. The micro-polymerization line is compact and may be used as a mobile and/or a versatile reactor. This microfluidic process is straightforward, versatile, economic, safe, uses low process temperatures and pressures, and provides high yields and excellent molecular control for the production of polymeric architectures from alkylene oxides.

This method overcomes the drawbacks of the prior art including,
(a) short reaction times are achieved under mild conditions;
(b) high operating temperature and pressure conditions are avoided;
(c) time-consuming initiation steps are avoided;
(d) homogeneous initiators are privileged, ensuring stability over long production campaigns without clogging issues;
(e) the downstream process is straightforward and enables the recycling of the solvents
(f) only small amounts of ethylene oxide are reacted per unit of time, therefore significantly reducing industrial risk;
(g) the design is very compact, economic, robust and offers full control over the process parameters;
(h) the equipment is simple, and compatible with scale-out or numbering-up strategies to increase the production scale; and
(i) the design is compatible with the production of both homo- or heterobifunctional aliphatic polyethers.

| **#** | **feature** |
|---|---|
| 1 | Alkylene oxide (monomer) |
| 2 | Initiator |
| 3 | Reaction mixture |
| 5 | Polymerized solution |
| 5p | Alkylene oxide polymer (of the polymerized solution) |
| 5s | Solvent of the polymerized solution |
| 6 | Functionalization agent |
| 7 | Termination agent |
| 8 | Pump |
| 9 | Mixer |
| 21 | Monomer solvent |
| 21AN | High AN monomer solvent |
| 21cex | Monomer solvent not according to the invention |
| 21DN | High DN monomer solvent |
| 22 | Initiator solvent |
| 101 | Solution reactor module |
| 102 | Initiator reactor module |
| 103 | Mixing reactor module |
| 104 | Polymerization reactor module |
| 105 | Polymer vessel |
| 105p | Separation unit |
| 106 | Functionalization reactor module |
| 107 | Termination reactor module |
| 121 | Monomer solution |
| 222 | Initiator solution |

## Claims

1. Continuous-flow process for the polymerization of an alkylene oxide comprising the following steps:
(a) mixing an alkylene oxide (1) with a monomer solvent (12), to form a monomer solution (121), wherein the monomer solvent is a polar aprotic solvent;
(b) forming a reaction mixture (3) by mixing the monomer solution with an anionic initiator (2) selected among the alkali or alkaline-earth alkoxides of general formula R-O-M, wherein
• R is a straight, branched or cyclic alkyl chain, an heterocycle, a glycol or a combination of two or several of these,
• O is oxygen, and
• M is or comprises an alkali, an alkaline-earth metal or salt thereof;
(c) allowing the reaction mixture to react for a polymerization time, t, comprised between 1 s and 60 min, at a polymerization temperature, T, comprised between 0 and 100°C, and at a polymerization pressure, P, comprised between 1 and 10 bar above atmospheric pressure, thus forming a polymerized solution (5) comprising a polymerized alkylene oxide (5p) and a solvent (5s); and
(d) separating the solvent (5s) from the polymerized alkylene oxide (5p).

2. Continuous-flow process according to claim 1, wherein the monomer solvent has:
• a donor number (DN) of at least 120 kJ / mol according to Gutmann's thermodynamic scale and/or
• an acceptor number (AN) of not more than 20 according to Gutmann-Beckett's scale and/or
• a dielectric constant (ε) greater than 30.

3. Continuous-flow process according to claim 1 or 2, wherein the monomer solvent is one of dimethyl sulfoxide (DMSO), hexamethylphosphoramide (HMPA), pyridine, tetraalkylureas, or cyclic alkylureas, preferably 1,3-Dimethyl-3,4,5,6-tetrahydro-2-pyrimidinone (DMPU).

4. Continuous-flow process according to any one of the preceding claims, carried out in a polymerization line, wherein step (a) is carried out in a solution reactor module (101), step (b) in a mixing reactor module (103) in fluid communication with the first reactor module by means of a connecting tube, and wherein step (c) is carried out in a polymerization reactor module (104), preferably a tubular reactor forming a serpentine.

5. Continuous-flow process according to claim 4, wherein the continuous-flow process is carried out in a micro-polymerization line, wherein the internal diameters of the solution and mixing reactor modules are comprised between 100 µm and 1000 µm, preferably between 200 and 800 µm and wherein the connecting tube and polymerization reactor module are capillary tubes of inner diameter comprised between 50 and 700 µm, preferably between 100 and 500 µm.

6. Continuous-flow process according to claim 5, wherein,
• The flow rate of the reaction mixture through the polymerization reactor module is comprised between 0.1 and 10 ml / min, preferably between 0.3 and 1 ml / min; and/or
• The flow rate of monomer solution into the mixing reactor module is comprised between 0.1 and 9 ml / min, preferably between 0.2 and 1 ml / min; and/or
• The flow rate of initiator into the mixing reactor module is comprised between 0.1 and 1 ml / min, preferably between 0.2 and 0.5 ml / min.

7. Continuous-flow process according to any one of claims 5 or 6, wherein a total inner volume of the solution, mixing, and polymerization reactor modules and connecting tubes is comprised between 1 and 10 ml, preferably between 2 and 6 ml.

8. Continuous-flow process according to any one of the preceding claims, wherein a monomer to initiator molar ratio is comprised between 2000 and 20, preferably between 100 and 30, and more preferably between 50 and 40.

9. Continuous-flow process according to any one of the preceding claims, wherein,
• The alkylene oxide is present in the monomer solution at a concentration comprised between 0.1 and 10 M, preferably between 1 and 5 M; and/or
• The anionic initiator is fed into the mixing reactor module in a solvent, preferably the same as in step (a), at a concentration comprised between 0.1 and 10 M, preferably between 1 and 5 M.

10. Continuous-flow process according to any one of claims 3 to 6, wherein the solution and mixing reactor modules are equipped with a mixing device comprising one or more of an arrow-head mixer, T-mixer, Y-mixer, cross-junction micromixer, or static micromixer, made of glass, stainless steel, polymeric material, or ceramics, or a combination of two or more of the foregoing materials.

11. Continuous-flow process according to any one of the preceding claims, further comprising between steps (c) and (d) an additional step of,
(c1) functionalizing one or both ends of polymer chains of the polymerized solution by addition in a functionalization reactor module (106) of one or two functionalization agents (6) to the reaction mixture as it polymerizes, or to the polymerized solution; and/or
(c2) terminating the polymerization by addition in a terminating reactor module (107) of a termination agent (7) to the polymerized solution after the time, t; and/or
(c3) monitoring the polymerization of the reaction mixture by means of one or more in line analysis units, preferably comprising at least one spectroscopic analysis unit.

12. Continuous-flow process according to any one of the preceding claims, wherein:
• the polymerization time, t, is comprised between 20 s and 50 min, preferably between 30 s and 20 min; and/or
• the polymerization temperature, T, is comprised between 20 and 50°C, preferably between 25 and 35°C; and/or
• the polymerization pressure, P, is comprised between 1.5 and 10 bar, preferably between 2 and 5 bar above atmospheric pressure.

13. Continuous-flow process according to any one of the preceding claims, wherein the alkylene oxide in step (a) is selected among ethylene oxide, propylene oxide or butylene oxide.

14. Continuous-flow process according to any one of the preceding claims, wherein M is selected among lithium, sodium or potassium.

15. Continuous-flow process according to any one of the preceding claims, wherein the anionic initiator is dissolved in a solvent (22) to form an initiator solution (222) before mixing with the monomer solution in step (b), preferably in the initiator solvent is the same as the monomer solvent.

## Patentansprüche

1. Kontinuierliches Durchlaufverfahren zur Polymerisation eines Alkylenoxids, das die folgenden Schritte umfasst:
(a) Mischen eines Alkylenoxids (1) mit einem Monomerlösungsmittel (12) zur Bildung einer Monomerlösung (121), wobei es sich bei dem Monomerlösungsmittel um ein polares aprotisches Lösungsmittel handelt;
(b) Bilden einer Reaktionsmischung (3) durch Mischen der Monomerlösung mit einem anionischen Initiator (2), der aus Alkali- oder Erdalkalialkoholaten der allgemeinen Formel R-O-M ausgewählt ist, wobei
• R für eine gerade, verzweigte oder cyclische Alkylkette, einen Heterocyclus, ein Glykol oder eine Kombination von zwei oder mehreren davon steht,
• 0 für Sauerstoff steht und
• M für ein Alkali-, ein Erdalkalimetall oder ein Salz davon steht oder diese umfasst;
(c) Umsetzen der Reaktionsmischung bei einer Polymerisationstemperatur T, die zwischen 0 und 100 °C umfasst, über einen Polymerisationszeitraum t, der zwischen 1 s und 60 min umfasst, und bei einem Polymerisationsdruck P, der zwischen 1 und 10 bar oberhalb des Atmosphärendrucks umfasst, wodurch eine polymerisierte Lösung (5) gebildet wird, die ein polymerisiertes Alkylenoxid (5p) und ein Lösungsmittel (5s) umfasst; und
(d) Trennen des Lösungsmittels (5s) von dem polymerisierten Alkylenoxid (5p).

2. Kontinuierliches Durchlaufverfahren nach Anspruch 1, wobei das Monomerlösungsmittel Folgendes aufweist:
• eine Donorzahl (DN) von mindestens 120 kJ/mol gemäß der thermodynamischen Skala nach Gutmann und/oder
• eine Akzeptorzahl (AN) von nicht mehr als 20 gemäß der Skala nach Gutmann und Beckett und/oder
• Dielektrizitätskonstante (ε) von mehr als 30.

3. Kontinuierliches Durchlaufverfahren nach Anspruch 1 oder 2, wobei es sich bei dem Monomerlösungsmittel um eines aus Dimethylsulfoxid (DMSO), Hexamethylphosphoramid (HMPA), Pyridin, Tetraalkylharnstoffen oder cyclischen Alkylharnstoffen, vorzugsweise um 1,3-Dimethyl-3,4,5,6-tetrahydro-2-pyrimidinon (DMPU), handelt.

4. Kontinuierliches Durchlaufverfahren nach einem der vorhergehenden Ansprüche, das in einer Polymerisationslinie durchgeführt wird, wobei Schritt (a) in einem Reaktormodul zur Lösung (101), Schritt (b) in einem Reaktormodul zum Mischen (103), das mit dem ersten Reaktormodul mittels eines Verbindungsrohrs in Fluidverbindung steht, durchgeführt wird und wobei Schritt (c) in einem Reaktormodul zur Polymerisation (104), vorzugsweise einem Rohrreaktor zur Bildung von Serpentin, durchgeführt wird.

5. Kontinuierliches Durchlaufverfahren nach Anspruch 4, wobei das kontinuierliche Durchlaufverfahren in einer Mikropolymerisationslinie durchgeführt wird, wobei die inneren Durchmesser der Reaktormodule zur Lösung und zum Mischen zwischen 100 µm und 1000 µm, vorzugsweise zwischen 200 und 800 µm, umfassen und wobei es sich bei dem Verbindungsrohr und dem Reaktormodul zur Polymerisation um Kapillarröhrchen mit einem Innendurchmesser, der zwischen 50 und 700 µm, vorzugsweise zwischen 100 und 500 µm, umfasst, handelt.

6. Kontinuierliches Durchlaufverfahren nach Anspruch 5, wobei
• die Fließrate der Reaktionsmischung durch das Reaktormodul zur Polymerisation zwischen 0,1 und 10 ml/min, vorzugsweise zwischen 0,3 und 1 ml/min, umfasst; und/oder
• die Fließrate der Monomerlösung in das Reaktormodul zum Mischen zwischen 0,1 und 9 ml/min, vorzugsweise zwischen 0,2 und 1 ml/min, umfasst; und/oder
• die Fließrate des Initiators in das Reaktormodul zum Mischen zwischen 0,1 und 1 ml/min, vorzugsweise zwischen 0,2 und 0,5 ml/min, umfasst.

7. Kontinuierliches Durchlaufverfahren nach einem der Ansprüche 5 oder 6, wobei ein Gesamtinnenvolumen der Reaktormodule zur Lösung, zum Mischen und zur Polymerisation und der Verbindungsrohre zwischen 1 und 10 ml, vorzugsweise zwischen 2 und 6 ml, umfasst.

8. Kontinuierliches Durchlaufverfahren nach einem der vorhergehenden Ansprüche, wobei ein Molverhältnis von Monomer zu Initiator zwischen 2000 und 20, vorzugsweise zwischen 100 und 30 und weiter bevorzugt zwischen 50 und 40 umfasst.

9. Kontinuierliches Durchlaufverfahren nach einem der vorhergehenden Ansprüche, wobei
• das Alkylenoxid in der Monomerlösung in einer Konzentration vorliegt, die zwischen 0,1 und 10 M, vorzugsweise zwischen 1 und 5 M, umfasst; und/oder
• der anionische Initiator dem Reaktormodul zum Mischen in einem Lösungsmittel, vorzugsweise dem gleichen wie in Schritt (a), in einer Konzentration, die zwischen 0,1 und 10 M, vorzugsweise zwischen 1 und 5 M, umfasst, zugeführt wird.

10. Kontinuierliches Durchlaufverfahren nach einem der Ansprüche 3 bis 6, wobei die Reaktormodule zur Lösung und zum Mischen mit einer Mischvorrichtung ausgestattet sind, die einen Pfeilkopf-Mischer, T-Mischer, Y-Mischer, Mikromischer mit sich kreuzendem Übergang und/oder statischen Mikromischer, gefertigt aus Glas, Edelstahl, Polymermaterial oder Keramik oder einer Kombination von zwei oder mehr der vorgenannten Materialien, umfasst.

11. Kontinuierliches Durchlaufverfahren nach einem der vorhergehenden Ansprüche, das ferner zwischen den Schritten (c) und (d) einen zusätzlichen Schritt des
(c1) Funktionalisierens von einem oder beiden Polymerkettenenden der polymerisierten Lösung in einem Reaktormodul zur Funktionalisierung (106) durch Zugabe von einem oder zwei Funktionalisierungsmitteln (6) zu der Reaktionsmischung, während sie polymerisiert, oder zu der polymerisierten Lösung; und/oder
(c2) Beendens der Polymerisation in einem Reaktormodul zur Beendigung (107) durch Zugabe eines Beendigungsmittels (7) zu der polymerisierten Lösung nach der Zeit t; und/oder
(c3) Überwachens der Polymerisation der Reaktionsmischung mittels einer oder mehreren sich in der Linie befindlichen Analyseeinheiten, die vorzugsweise mindestens eine spektroskopische Analyseeinheit umfasst bzw. umfassen;
umfasst.

12. Kontinuierliches Durchlaufverfahren nach einem der vorhergehenden Ansprüche, wobei
• der Polymerisationszeitraum t zwischen 20 s und 50 min, vorzugsweise zwischen 30 s und 20 min, umfasst; und/oder
• die Polymerisationstemperatur T zwischen 20 und 50 °C, vorzugsweise zwischen 25 und 35 °C, umfasst; und/oder
• der Polymerisationsdruck P zwischen 1,5 und 10 bar, vorzugsweise zwischen 2 und 5 bar, oberhalb des Atmosphärendrucks umfasst.

13. Kontinuierliches Durchlaufverfahren nach einem der vorhergehenden Ansprüche, wobei das Alkylenoxid in Schritt (a) aus Ethylenoxid, Propylenoxid oder Butylenoxid ausgewählt ist.

14. Kontinuierliches Durchlaufverfahren nach einem der vorhergehenden Ansprüche, wobei M aus Lithium, Natrium oder Kalium ausgewählt ist.

15. Kontinuierliches Durchlaufverfahren nach einem der vorhergehenden Ansprüche, wobei der anionische Initiator vor dem Mischen mit der Monomerlösung in Schritt (b) zur Bildung einer Initiatorlösung (222) in einem Lösungsmittel (22) gelöst wird, wobei es sich bei dem Initiatorlösungsmittel vorzugsweise um das gleiche wie das Monomerlösungsmittel handelt.

## Revendications

1. Procédé en flux continu pour la polymérisation d'un oxyde d'alkylène comprenant les étapes suivantes :
(a) mélanger un oxyde d'alkylène (1) avec un solvant (12) de monomère, pour former une solution de monomère (121), le solvant de monomère étant un solvant aprotique polaire ;
(b) former un mélange réactionnel (3) par le mélange de la solution de monomère avec un initiateur anionique (2) choisi parmi les alcoxydes alcalins ou alcalino-terreux de formule générale R-O-M,
• R étant une chaîne alkyle droite, ramifiée ou cyclique, un hétérocycle, un glycol ou une combinaison de deux ou plusieurs de ceux-ci,
• 0 étant oxygène, et
• M étant ou comprenant un alcalin, un métal alcalino-terreux ou un sel correspondant ;
(c) laisser le mélange réactionnel réagir pendant un temps de polymérisation, t, compris entre 1 s et 60 min, à une température de polymérisation, T, comprise entre 0 et 100°C, et à une pression de polymérisation, P, comprise entre 1 et 10 bars au-dessus de la pression atmosphérique, formant ainsi une solution polymérisée (5) comprenant un oxyde d'alkylène polymérisé (5p) et un solvant (5s) ; et
(d) séparer le solvant (5s) de l'oxyde d'alkylène polymérisé (5p).

2. Procédé en flux continu selon la revendication 1, le solvant de monomère possédant :
• un indice de donneur (DN) d'au moins 120 kJ/mole selon l'échelle thermodynamique de Gutmann et/ou
• un indice d'accepteur (AN) non supérieur à 20 selon l'échelle de Gutmann-Beckett et/ou
• une constante diélectrique (ε) supérieure à 30.

3. Procédé en flux continu selon la revendication 1 ou 2, le solvant de monomère étant l'un parmi le diméthylsulfoxyde (DMSO), l'hexaméthylphosphoramide (HMPA), la pyridine, des tétraalkylurées, et des alkylurées cycliques, préférablement la 1,3-diméthyl-3,4,5,6-tétrahydro-2-pyrimidinone (DMPU).

4. Procédé en flux continu selon l'une quelconque des revendications précédentes, mis en œuvre dans une ligne de polymérisation, l'étape (a) étant mise en œuvre dans un module de réacteur de solution (101), l'étape (b) dans un module de réacteur de mélange (103) en communication fluidique avec le premier module de réacteur au moyen d'un tube de connexion, et l'étape (c) étant mise en œuvre dans un module de réacteur de polymérisation (104), préférablement un réacteur tubulaire formant un serpentin.

5. Procédé en flux continu selon la revendication 4, le procédé en flux continu étant mis en œuvre dans une ligne de micro-polymérisation, les diamètres internes des modules de réacteur de solution et de mélange étant compris entre 100 µm et 1 000 µm, préférablement entre 200 et 800 µm et le tube de connexion et le module de réacteur de polymérisation étant des tubes capillaires d'un diamètre interne compris entre 50 et 700 µm, préférablement entre 100 et 500 µm.

6. Procédé en flux continu selon la revendication 5,
• le débit du mélange de réaction à travers le module de réacteur de polymérisation étant compris entre 0,1 et 10 ml/min, préférablement entre 0,3 et 1 ml/min ; et/ou
• le débit de solution de monomère dans le module de réacteur de mélange étant compris entre 0,1 et 9 ml/min, préférablement entre 0,2 et 1 ml/min ; et/ou
• le débit de l'initiateur dans le module de réacteur de mélange étant compris entre 0,1 et 1 ml/min, préférablement entre 0,2 et 0,5 ml/min.

7. Procédé en flux continu selon l'une quelconque des revendications 5 et 6, un volume interne total des modules de réacteur de solution, de mélange, et de polymérisation et des tubes de connexion étant compris entre 1 et 10 ml, préférablement entre 2 et 6 ml.

8. Procédé en flux continu selon l'une quelconque des revendications précédentes, un rapport molaire de monomère sur initiateur étant compris entre 2 000 et 20, préférablement entre 100 et 30, et plus préférablement entre 50 et 40.

9. Procédé en flux continu selon l'une quelconque des revendications précédentes,
• l'oxyde d'alkylène étant présent dans la solution de monomère à une concentration comprise entre 0,1 et 10 M, préférablement entre 1 et 5 M ; et/ou
• l'initiateur anionique étant alimenté dans le module de réacteur de mélange dans un solvant, préférablement le même que dans l'étape (a), à une concentration comprise entre 0,1 et 10 M, préférablement entre 1 et 5 M.

10. Procédé en flux continu selon l'une quelconque des revendications 3 à 6, les modules de réacteur de solution et de mélange étant équipés d'un dispositif de mélange comprenant l'un ou plusieurs parmi un mélangeur à tête de flèche, un mélangeur en T, un mélangeur en Y, un micromélangeur à jonction croisée, et un micromélangeur statique, fait de verre, d'acier inoxydable, d'un matériau polymérique, ou de céramiques, ou d'une combinaison de deux ou plus des matériaux précédents.

11. Procédé en flux continu selon l'une quelconque des revendications précédentes, comprenant en outre une étape supplémentaire, entre les étapes (c) et (d), de
(c1) fonctionnaliser l'une ou les deux terminaisons de chaînes de polymère de la solution polymérisée par l'ajout, dans un module de réacteur de fonctionnalisation (106), d'un ou deux agents de fonctionnalisation (6) au mélange réactionnel alors qu'il polymérise, ou à la solution polymérisée ; et/ou
(c2) terminer la polymérisation par l'ajout, dans un module de réacteur de terminaison (107), d'un agent de terminaison (7) à la solution polymérisée après le temps t ; et/ou
(c3) suivre la polymérisation du mélange réactionnel au moyen d'une ou plusieurs unités d'analyse en ligne, préférablement comprenant au moins une unité d'analyse spectroscopique.

12. Procédé en flux continu selon l'une quelconque des revendications précédentes,
• le temps de polymérisation, t, étant compris entre 20 s et 50 min, préférablement entre 30 s et 20 min ; et/ou
• la température de polymérisation, T, étant comprise entre 20 et 50 °C, préférablement entre 25 et 35 °C ; et/ou
• la pression de polymérisation, P, étant comprise entre 1,5 et 10 bars, préférablement entre 2 et 5 bars au-dessus de la pression atmosphérique.

13. Procédé en flux continu selon l'une quelconque des revendications précédentes, l'oxyde d'alkylène dans l'étape (a) étant choisi parmi l'oxyde d'éthylène, l'oxyde de propylène et l'oxyde de butylène.

14. Procédé en flux continu selon l'une quelconque des revendications précédentes, M étant choisi parmi le lithium, le sodium et le potassium.

15. Procédé en flux continu selon l'une quelconque des revendications précédentes, l'initiateur anionique étant dissous dans un solvant (22) pour former une solution d'initiateur (222) avant le mélange avec la solution de monomère dans l'étape (b), préférablement le solvant d'initiateur étant le même que le solvant de monomère.
